# FASCICULE DE BREVET EUROPEEN

(11) **EP 0 331 541 B1**
(45) Date de publication et mention de la délivrance du brevet: **11.08.1993**
(21) Numéro de dépôt: 89400295.5
(22) Date de dépôt: 02.02.1989
(51) Int. Cl.: B22F 1/00, B01J 19/08

(54) **Installation pour l'amélioration de la qualité d'une poudre métallique ou céramique**
Vorrichtung zur Verbesserung der Qualität eines metallischen oder keramischen Pulvers
Apparatus for modifying the quality of metal powder or ceramic powder

(30) Priorité: 04.02.1988 FR 8801296
(43) Date de publication de la demande: 06.09.1989
(73) Titulaire: COMMISSARIAT A L'ENERGIE ATOMIQUE, 75015 Paris Cédex 15 (FR)
(72) Inventeur: Hansz, Bernard, F-91710 Vert-le-Petit (FR); Houdayer, Michel, F-75007 Paris (FR)
(74) Mandataire: Mongrédien, André

(56) Documents cités:
- FR-A- 1 398 731
- US-A- 2 892 766
- US-A- 3 451 910
- NTIS TECH. NOTES, no. 4G, avril 1985, Springfield, VA (US); p. 401, "Hollow spheres of metallic glass"

## Description

L'invention concerne l'amélioration de la qualité des poudres métalliques ou céramiques, et en particulier la forme des particules, leur surface spécifique, leur porosité, et leur teneur en gaz absorbé.

L'amélioration de ce genre de poudres peut s'effectuer de différentes manières. En premier lieu, elle peut être obtenue lors de la fabrication même de la poudre ; c'est le cas des fabrications de poudres par fusion d'un lingot, suivies d'une pulvérisation. Une autre amélioration de la qualité de la poudre consiste à effectuer un étuvage après l'obtention de la poudre. Enfin, le traitement par chalumeau est souvent utilisé pour obtenir une amélioration de la qualité des poudres.

Ces traitements présentent des risques d'évolution de la poudre au cours de son refroidissement, et des risques d'absorption de gaz. Au cours d'un traitement par chalumeau, les risques de coalescence des particules formant la poudre sont importants. De plus, certaines techniques d'amélioration des propriétés chimiques des poudres par traitement en lit fluidisé sont d'un côut très élevé.

Le but de l'invention est de proposer une installation d'amélioration de la qualité des poudres permettant d'éviter les inconvénients précités, tout en cherchant à obtenir des particules sphériques de réactivité accrue pendant leur utilisation, et purifiées ou modifiées chimiquement.

A cet effet, on utilise un procédé d'amélioration de la qualité de poudres formées de particules par modification des caractéristiques physiques et chimiques des particules utilisant au moins un traitement thermique. Il comprend en outre les étapes suivantes : passage de la poudre à traiter dans un plasma susceptile d'être réactif pour lui faire subir une très forte et brutale élévation de température, provoquant un état hors d'équilibre des particules, cet état étant suivi assitôt d'un passage dans un cône de refroidissement créé par la pulvérisation d'un fluide cryogénique pour imposer aux particules de la poudre une trempe instantanée alors que les particules sont encore dans un état hors d'équilibre.

Ce procédé apporte plusieurs avantages qui, énoncés succinctement, sont les suivants : une meilleure sphéroïdisation des particules améliorant l'efficacité de la poudre dans son utilisation (notamment réactivaté chimique, coulabilité,...), une amélioration de la granulométrie de la poudre, une purification de cette poudre par élimination des gaz et impuretés inclus dans les particules.

Ce procédé peut se compléter par une phase de récupération des particules de la poudre selon plusieurs dimensions de particules. Selon les différentes mises en oeure du procédé, le fluide cryogénique peut être de l'argon ou de l'hélium liquide.

Selon plusieurs variantes de ce procédé, le plasma peut se présenter sous la forme d'un mélange, élaboré en fonction des particules et des impuretés à traiter dans la poudre.

Par contre, le brevet français n° 1 398 731 décrit un traitement de poudre de carbure de tungstène dont on désire améliorer certaines caractéristiques physiques et chimiques. Le traitement consiste à injecter la poudre dans un jet de plasma, puis à lui faire subir aussitôt un refroidissement pour SolidiFier Fondues les particules par le plasma. On y utilise une canalisation pour réaliser le passage de la poudre dans le plasma, une torche à plasma et un tuyau d'alimentation en particules. Le refroidissement s'effectue dans une chambre tubulaire entourée d'un refroidissement à eau au moyen d'un serpentin.

L'objet principal de l'invention est une installation pour la mise en oeuvre du procédé précité. Elle comprend principalement une enceinte de projection dans laquelle est placée une seule torche de projection du plasma et de la poudre, et des buses de pulvérisation cryogénique du fluide cryogénique, ces buses étant placées à la sortie de la torche de projection. Elle utilise également un conteneur du liquide cryogénique et un pupitre de commande de la torche de projection. Un des principaux avantages d'une telle installation est qu'elle peut être arrêtée ou mise en marche à n'importe quel moment, et d'une manière très aisée, contrairement aux mises en oeuvre des procédés citées au début de la présente demande.

Pour mettre en oeuvre la récupération des poudres, l'installation selon l'invention peut comprendre un premier pot de récupération par gravité des particules lourdes, placé à la sortie de l'enceinte de projection, et un cyclone de séparation par dépression des particules moyennes qui tombent par gravité et des particules très fines qui sont entraînées par un flux d'air.

On peut envisager de placer un contrôle de température à l'intérieur de l'enceinte.

Les buses sont de préférence utilisées par nombre de trois et légérement inclinées par rapport au plan perpendiculaire à la direction générale de déplacement des particules.

L'invention et ses différentes caractéristiques techniques seront mieux comprises à la lecture de la description qui suit, annexées des deux figures suivantes :
- la figure 1 représente un schéma de l'installation selon l'invention, et
- la figure 2 représente un schéma plus détaillé de la torche de projection et des buses de pulvérisation cryogénique utilisées dans l'installation selon l'invention.

Le procédé utilisé et l'installation selon l'invention seront décrits conjointement dans la description.

Le principe selon l'invention consiste à améliorer la qualité de la poudre par modification des caractéristiques chimiques et physiques des particules formant cette poudre, et ceci en utilisant deux traitements thermiques. Il consiste plus particulièrement à passer la poudre à traiter dans un plasma susceptible d'être réactif. De cette manière, la poudre subit une très forte et très brutale élévation de température. Par exemple, cette élévation de température peut être de l'ordre de 20 000° pendant un temps qui est de l'ordre de la milliseconde. Il s'ensuit une volatilisation partielle de la particule qui prend alors un état hors d'équilibre. Le principe consiste également à faire subir à chaque particule, aussitôt après son passage dans le plasma, et alors même qu'elle est encore en état hors d'équilibre, une trempe brutale. Cette trempe est obtenue par la pulvérisation d'un fluide cryogénique à la sortie du passage des particules de la poudre dans le plasma. Cette trempe s'effectue pendant une durée qui est de l'ordre de la microseconde. La trempe est donc instantanée, des particules étant encore hors d'équilibre.

L'élévation brutale de température obtenue par passage de plasma permet de faire fondre les particules en éliminant les impuretés qu'elles contiennent. Celles-ci peuvent être du gaz occlus, des oxydes ou des impuretés solides ou volatiles. Ce moyen d'échauffement permet également de provoquer éventuellement des réactions chimiques, suivant la composition du plasma qui est utilisée. L'opération de trempe rapide par refroidissement au moyen d'un fluide cryogénique permet de figer les nouvelles caractéristiques des particules de la poudre à la sortie du passage dans le plasma.

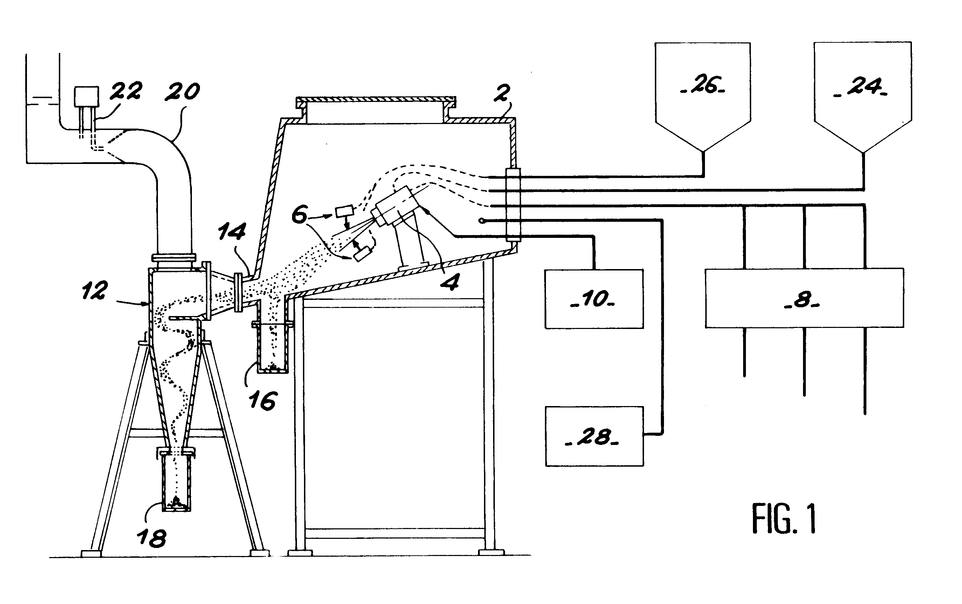

En référence à la figure 1, on distingue principalement et au centre une enceinte de projection 2 dans laquelle est disposée une torche de projection 4 du plasma et de la poudre, et des buses de pulvérisation cryogénique 6 placées à la sortie de la torche de projection 4. Ces éléments principaux seront détaillés plus loin.

Pour compléter l'installation et le principe selon l'invention, on prévoit de récupérer la poudre selon plusieurs dimensions de particules, ceci afin de les trier et de les dépoussiérer. A cet effet, à la sortie 14 de l'enceinte 2 est placé un premier pot 16 de récupération par gravité des particules les plus lourdes. En effet, la vitesse de déplacement des particules à la sortie de la torche étant de l'ordre de 500 mètres par seconde, en plaçant de façon déterminée par rapport à la trajectoire des particules, un tel pot de récupération 16, placé en-dessous de l'entrée 14 de l'enceinte 2, on peut récupérer par gravité les particules les plus lourdes. La récupération peut se prolonger par un cyclone 12 placé après la sortie 14 de l'enceinte 2. Celui-ci provoque une dépression par un flux d'air tournant vertical, projetant ainsi les particules les plus légères en haut du cyclone, les particules plus lourdes ont tendance à tomber par gravité. Un deuxième pot 18 est donc placé en-dessous du cyclone 12 pour les récupérer. On utilise un tube de récupération 20 placé en haut du cyclone 12 pour récupérer les particules les plus fines. Ce tube peut comporter un tube de Pitot 22 permettant de mesurer la vitesse du flux d'air dans ce tube de récupération 20.

Pour compléter cette installation, on utilise un pupitre de commande 10 de la torche de projection et un générateur de plasma 8. Sont également indispensables, un premier conteneur 26 du liquide cryogénique et un deuxième conteneur 24 contenant la poudre à traiter.

La torche de projection 4 peut être alimentée par un distributeur "TWIN", le générateur de plasma pouvant être un générateur "Plasmatechnik" complété d'un pupitre de commande "Plasmatechnik" permettant de régler le débit de poudre et le débit de gaz. Les buses de pulvérisation cryogénique 6 peuvent être des buses "EMANI 1/4".

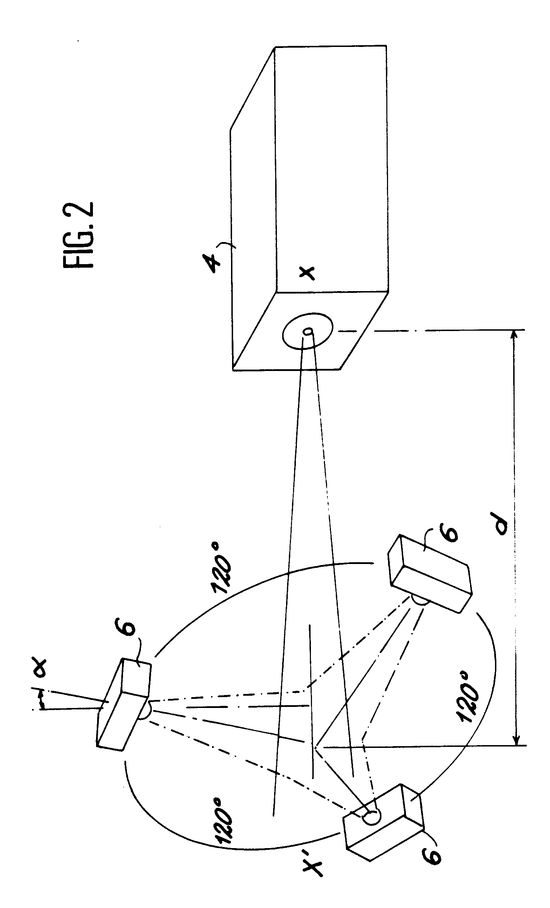

La figure 2 permet de voir, de manière plus précise, la position des buses de pulvérisation cryogénique 6 par rapport à la torche de projection 4. Dans le cas de l'utilisation de trois buses, celles-ci sont placées angulairement à 120° les unes par rapport aux autres, autour d'un axe XX′ symbolisant la trajectoire des particules de poudre sortant de la torche de projection 4. Pour donner un ordre de grandeur de cette réalisation, les buses 6 sont placées à une distance d d'environ 100 mm de la torche 4 le long de l'axe XX′. Elles sont placées à des distances équidistantes de cet axe XX′. De façon préférentielle, elles sont positionnées, inclinées d'un angle de l'ordre d'une dizaine de degrés par rapport à un plan perpendiculaire à l'axe XX′. Cette inclinaison est telle que les buses sont inclinées vers l'avant par rapport à la progression des particules de la poudre. Suivant les différentes réalisations possibles, l'angle α peut également varier entre 5 et 60°.

On peut aussi prévoir l'utilisation d'un dispositif de controle 28 de la température ambiante à l'intérieur de l'enceinte 2.

Il est possible, en fonction des différentes particules à traiter et des impuretés qu'elles contiennent, de moduler le mélange de plasma. On peut ainsi, en complément de l'élévation brutale de température, obtenir, à l'aide du plasma, une oxydation partielle ou une carburation, ou bien une autre réaction chimique supplémentaire, pendant la même opération.

Un des principaux avantages du principe selon l'invention est la bonne sphéroïdisation des particules constituant la poudre. Celle-ci permet d'améliorer les transferts de chaleur, les transferts de quantité de mouvement, et donne une meilleure coulabilité de la poudre, ce qui est très important dans l'utilisation de celle-ci pour le frittage. Du fait de la bonne sphéroïdisation, chaque particule a une surface spécifique pratiquement minimale.

Un autre avantage est l'amélioration de la granulométrie de la poudre ainsi traitée, c'est-à-dire une amélioration de l'uniformisation de la taille des particules.

D'autre part, l'invention permet l'élimination des gas occlus à l'intérieur des particules, des oxydes ou des impuretés qu'elles contiennent. Les risques d'éclatement de ces particules dus à la présence de ces matières étrangères, ayant des températures de fusion très différentes, s'en trouvent très réduits.

De plus, lors du frittage de la poudre traitée, les mécanismes d'écoulement d'évaporation-condensation sont améliorés.

Il est possible d'obtenir au moyen de l'invention des poudres amorphes, c'est-à-dire sans structure cristalline. Il est également possible d'obtenir des poudres à caractéristiques chimiques particulières par l'utilisation du caractère réactif du plasma.

L'installation décrite dans la présente demande est d'une utilisation très aisée, puisqu'il suffit de régler et de commander le fonctionnement de la torche de projection et le fonctionnement des buses de pulvérisation cryogénique, ces commandes pouvant être regroupées. Ce matériel utilisant l'échauffement par plasma et le refroidissement par liquide cryogénique permet des mises en marche et des arrêts très fréquents, et ne nécessitant que très peu de préparatifs. L'opérateur peut arrêter le mécanisme d'un moment à l'autre ; il en est de même pour une mise en marche.

## Revendications

1. Installation pour la mise en oeuvre d'un procédé d'amélioration de la qualité de poudres formées de particules, par modification des caractéristiques physiques et chimiques, utilisant au moins un traitement thermique et comportant au moins les deux étapes suivantes : passage de la poudre à traiter dans un plasma susceptible d'être réactif pour lui faire subir une très forte et brutale élévation de température, provoquant un état hors d'équilibre des particules, cet état étant suivi aussitôt d'un refroidissement pour imposer aux particules de la poudre une trempe instantanée alors que les particules sont encore dans un état hors d'équilibre, l'installation étant caractérisée en ce qu'elle comprend une enceinte de projection (2) dans laquelle est placée une seule torche de projection (4) du plasma et de la poudre, et des buses de pulvérisation cryogénique (6) d'un fluide cryogénique, lesdites buses (6) étant placées à la sortie de la torche de projection (4) de façon à créer un cône de refroidissement.

2. Installation selon la revendication 1, caractérisée en ce qu'elle comprend un pupitre de commande (10) de la torche de projection (4), un générateur de plasma (8), un premier conteneur (24) de la poudre à traiter et un deuxième conteneur (26) du fluide cryogénique.

3. Installation selon la revendication 1, caractérisée en ce qu'elle comprend un premier pot (16) de récupération par gravité des particules lourdes, placé à une sortie (14) de l'enceinte de projection (2), un cyclone (12) de séparation par dépression des particules moyennes qui tombent par gravité dans un deuxième pot (18) et des particules fines qui sont entraînées par un flux d'air dans un tube de récupération (20) pour récupérer la poudre selon plusieurs dimensions de particules.

4. Installation selon l'une quelconque des revendications 1 à 3, caractérisée en ce qu'elle comprend un dispositif de contrôle de température (28) à l'intérieur de l'enceinte (2).

5. Installation selon l'une quelconque des revendications 1 à 4, caractérisée en ce que les buses de pulvérisation cryogénique (6) sont au nombre de trois, disposées angulairement à 120° l'une par rapport à l'autre, et formant un angle (α) d'inclinaison déterminé avec un plan perpendiculaire à la direction générale de déplacement des particules de la poudre.

## Claims

1. Installation for performing a process for improving the quality of powders formed from particles by modifying the physical and chemical characteristics, using at least one heat treatment and having at least the two following stages: passage of the powder to be treated into a plasma which can be reactive so that it undergoes a very pronounced, sudden temperature rise, so that the particles are no longer in equilibrium, which is followed immediately by a cooling in order to impose on the powder particles an instantaneous quench hardening when said particles are still out of equilibrium, the installation being characterized in that it comprises a spraying enclosure (2) in which is placed a single spraying torch (4) for the plasma and the powder and nozzles (6) for the cryogenic spraying of a cryogenic fluid, said nozzles (6) being placed at the outlet of the spraying torch (4) so as to create a cooling cone.

2. Installation according to claim 1, characterized in that it comprises a control panel (10) for the spraying torch (4), a plasma generator (8), a first container (24) for the powder to be treated and a second cryogenic fluid container (26).

3. Installation according to claim 1, characterized in that it comprises a first container (16) for the gravity recovery of the heavy particles placed at the outlet (14) of the spraying enclosure (2), a cyclone (12) for the vacuum separation of the average-sized particles which drop by gravity into a second container (18) and fine particles which are entrained by an air flow in a recovery tube (20) for the recovery of the powder as a function of the particle sizes.

4. Installation according to any one of the claims 1 to 3, characterized in that it comprises a temperature control device (28) within the enclosure (2).

5. Installation according to any one of the claims 1 to 4, characterized in that there are three cryogenic spraying nozzles (6) arranged at 120° from one another and forming a predetermined inclination angle α with a plane perpendicular to the general displacement direction of the powder particles.

## Patentansprüche

1. Vorrichtung zur Ausführung eines Verfahrens zur Verbesserung der Qualität von aus Teilchen gebildeten Pulvern durch Modifizierung von physikalischen und chemischen Eigenschaften, unter Verwendung von mindestens einer thermischen Behandlung und umfassend mindestens die beiden folgenden Schritte: Durchgang des zu behandelnden Pulvers durch ein reaktionsfähiges Plasma, um es einer sehr starken und plötzlichen Temperaturerhöhung auszusetzen, was einen Nichtgleichgewichtszustand der Teilchen hervorruft, auf den sogleich eine Abkühlung erfolgt, um die Teilchen des Pulvers augenblicklich zu härten, während die Teilchen noch in einem Nichtgleichgewichtszustand sind, wobei die Vorrichtung dadurch gekennzeichnet ist, daß sie eine Spritzkammer (2), in der sich ein einziger Spritzbrenner (4) für das Plasma und das Pulver befindet, und Düsen für die kryogene Zerstäubung (6) eines kryogenen Fluids umfaßt, wobei sich diese Düsen (6) am Ausgang des Spritzbrenners (4) befinden, so daß sie einen Abkühlungskonus bilden.

2. Vorrichtung nach Anspruch 1, dadurch gekennzeichnet, daß sie ein Steuerpult (10) des Spritzbrenners (4), einen Plasmagenerator (8), einen ersten Behälter (24) des zu behandelnden Pulvers und einen zweiten Behälter (26) des kryogenen Fluids umfaßt.

3. Vorrichtung nach Anspruch 1, dadurch gekennzeichnet, daß sie einen ersten Topf (16) zum Sammeln der schweren Teilchen durch Schwerkraft, der sich am Ausgang (14) der Spritzkammer (2) befindet, einen Fliehkraftabscheider (12) zur Trennung durch Unterdruck (dépression) der mittleren Teilchen, die durch Schwerkraft in einen zweiten Topf (18) fallen, und der feinen Teilchen, die von einem Luftstrom in ein Sammelrohr (20) mitgerissen werden, um das Pulver nach mehreren Teilchengrößen getrennt zu sammeln, umfaßt.

4. Vorrichtung nach einem der Ansprüche 1 bis 3, dadurch gekennzeichnet, daß sie eine Einrichtung zur Temperaturkontrolle (28) im Inneren der Kammer (2) umfaßt.

5. Vorrichtung nach einem der Ansprüche 1 bis 4, dadurch gekennzeichnet, daß die Düsen der kryogenen Zerstäubung (6) drei an der Zahl sind, in einem Winkel von 120° zueinander angebracht sind und einen bestimmten Neigungswinkel (α) mit einer Ebene senkrecht zu der allgemeinen Richtung der Fortbewegung der Teilchen des Pulvers bilden.
